Europäisches Patentamt

European Patent Office

Office européen des brevets

(11) Publication number: **0 217 598 B1**

## EUROPEAN PATENT SPECIFICATION

(45) Date of publication of patent specification: **22.12.93**  (51) Int. Cl.⁵: **B32B 27/32**, B32B 27/18, B65D 65/40

(21) Application number: **86307186.6**

(22) Date of filing: **18.09.86**

(54) Heat sealable film laminate.

(30) Priority: **26.09.85 US 780159**

(43) Date of publication of application:
**08.04.87 Bulletin 87/15**

(45) Publication of the grant of the patent:
**22.12.93 Bulletin 93/51**

(84) Designated Contracting States:
**AT BE CH DE FR GB IT LI LU NL SE**

(56) References cited:
**EP-A- 0 114 311**
**EP-A- 0 194 588**
**DE-A- 1 786 592**
**US-A- 4 293 608**

(73) Proprietor: **MOBIL OIL CORPORATION**
**150 East 42nd Street**
**New York New York 10017(US)**

(72) Inventor: **Donovan, Kevin Michael**
**15 Greenwich Way**
**Milford Connecticut 06460(US)**
Inventor: **Keung, Jay Kin**
**6011 Allen Padgham Road**
**Macedon New York 14502(US)**
Inventor: **Balloni, Riccardo**
**42 Bent Oak Trail**
**Fairport New York 14450(US)**

(74) Representative: **Cooper, John Anthony**
**Mobil Court**
**3 Clements Inn**
**London WC2A 2EB (GB)**

Rank Xerox (UK) Business Services
(3.10/3.6/3.3.1)

**Description**

**Description for the following Contracting States : BE, DE, FR, GB, IT, NL**

This invention relates to a heat sealable polymer film laminate.

Heat sealable multilayer films which are especially useful as packaging materials are well known in the art. For example, U.S. Patent No. 4,343,852 describes a uniaxially or biaxially stretched composite film packaging material of from 5 to 200 micron/meters total thickness possessing a propylene polymer base film and at least one surface film containing at least two of (a) an ethylene-propylene (EP) copolymer, (b) a propylene-alpha-olefin copolymer and (c) a copolymer of butene and any other alpha-olefin. The propylene polymer base film can contain any one of a variety of additives, e.g., a lubricating agent such as a fatty acid amide, and each surface film can contain from 0.01 to 0.15 parts by weight of a silicone oil to improve its coefficient of friction in the heated state and reduce its slide resistance caused during hot plate sealing by an automatic packaging machine. Examples of silicone oils which are said to be useful for this purpose are polydimethylsiloxane, polymethylphenylsiloxane, olefin-modified silicone, polyether (e.g. polyethylene glycol, polypropylene glycol)-modified silicone, olefin/polyether-modified silicone and epoxy-modified silicone.

U.S. Patent No. 4,400,428 describes a heat sealable, multilayer film packaging material possessing a biaxially stretched polypropylene film as the base film, an adhesion-promoting layer of modified polyolefin, a gas-barrier layer of hydrolyzed ethylene-vinyl acetate copolymer and a heat-sealing layer of olefin polymers, wherein the base film carries on at least one surface a layer combination consisting of: (a) a heat sealable outer layer of polyethylene or of an ethylene copolymer containing at least 3%, and preferably at least 4%, by weight of ethylene; (b) an adhesion-promoting layer of modified polyolefin; (c) a gas-barrier layer of a hydrolyzed ethylene/vinyl acetate copolymer containing from 50 to 80 mole percent of vinyl acetate units of which at least 90% by hydrolyzed; (d) an adhesion- promoting layer of modified polyolefin; and, (e) a layer of polyethylene or of an ethylene copolymer containing at least 3, preferably at least 4% by weight of ethylene. Layer (a) contains an additive combination consisting of: (1) from 0.3 to 1% by weight, basedon the sealable layer, of a long-chain aliphatic amine; (2) from 0.1 to 0.7% by weight, based on the sealable layer, of a dispersed thermoplastic polymer which is incompatible with the polyethylene or ethylene copolymer and which has a softening point at most 50°C below or above the softening point of the polyethylene or ethylene copolymer; and, (3) from 0.1 to 1.2% by weight, preferably 0.2-0.7, based on the sealable layer, of a polydialkylsiloxane, preferably polydimethylsiloxane. The foregoing additive combination is said to produce a multilayer film having good slip properties combined with good machine processibility compared to multilayer films containing known type lubricants such as the fatty acid amides, e.g., erucamide.

U.S. Patent No. 4,419,411 describes an oriented multilayer polypropylene film structure comprising coextended layers of: (a) a base layer comprising polypropylene of comparatively high stereoregularity, the precursor resin of which contains an amide of a water-insoluble monocarboxylic acid having 8 to 24 carbon atoms, e.g., erucamide; (b) a skin layer comprising a polyolefin of comparatively low stereoregularity on at least one surface of (a), said skin layer containing a surface-modifying proportion of a combination of finely divided silica and a silicone oil such as a 30,000 centistokes polydimethylsiloxane; the surface of skin layer (b) having bloomed thereon a surface-modifying proportion of at least some of the amide of base layer (a).

U.S. Patent No. 4,502,263 describes a heat sealable polyolefinic multilayer film possessing a base layer comprising a propylene polymer and at least one sealable layer containing at least one propylene copolymer, at least one low-molecular weight resin and at least one polydiorgano- siloxane, wherein the sealing layer comprises a combination of: (a) from about 68.5 to 89.7% by weight, based on the weight of the sealable layer, of an olefin resin composition comprising an ethylene-propylene-butylene terpolymer and a propylene-butylene copolymer, corresponding to a content of from 0.1 to 7% by weight of ethylene, 53 to 89.9% by weight of propylene and 10 to 40% by weight of butylene, based on the weight of the olefin resin composition; (b) from 5 to 15% by weight, based on the weight of the sealable layer, of a low-molecular weight resin, which is compatible with the olefin resin composition; (c) from 5 to 15% by weight, based on the weight of the sealable layer, of a propylene homopolymer; and (d) from 0.3 to 1.5% by weight, based on the weight of the sealable layer, of a polydiorganosiloxane such as any of those referred to above.

US 4293608 discloses a heat sealable material comprising (A) a stretched base layer comprising a propylene polymer and (B) on at least one surface of said base layer a stretched surface layer comprising a blend of a propylene-ethylene copolymer and a $C_4$-$C_{10}$ α-olefin propylene copolymer comprising units of a $C_4$-$C_{10}$ α-olefin and units of propylene in a weight proportion of 30:70 to 5:95, said blend being present in a weight proportion of 20:80 to 94:6 by weight.

EP 0 217 598 B1

EP-A-0 194 588, filed on 06.03.86 and claiming a priority date of 15.03.85, is state of the art pursuant Article 54(3)EPC. It discloses oriented, heat-sealable, 3-layer laminates comprising a core layer made of polypropylene and 2 polyolefinic heat-sealable layers, one being corona treated and devoid of polydialkylisiloxane, the other not being corona-treated and comprising polydialkylsiloxane capable of being partly transferred to the other heat-sealable layer upon contact therewith.

An object of the present invention is to provide an oriented, heat sealable polymer film laminate possessing a low coefficient of friction, good receptivity for water-based coatings and good optical clarity.

According to the present invention, there is provided an oriented, heat-sealable polymer film laminate comprising:

(a) a polypropylene core layer, and

(b) a first heat-sealable surface layer for receiving a water-based coating provided on one surface of the core layer (a), the first surface layer being formed from a polymer selected from an ethylene-propylene-butene-1 terpolymer, an ethylene-propylene random copolymer and a blend thereof, said polymer being compounded with an anti-blocking agent but not being compounded with silicone oil;

(c) a second surface layer on the other surface of core layer (a) and formed from a polymer selected from an ethylene-propylene-butene-1 terpolymer, an ethylene-propylene random copolymer and a blend thereof, said polymer being compounded with an anti-blocking agent and a silicone oil such that a coefficient of friction-reducing amount thereof is present on the exposed surface of layer (b) as well as the exposed surface of layer (c) following mutual contact of said surfaces.

The term "water-based coating" is to be understood in its broadest sense and includes water-based inks and water-based adhesives.

The term "anti-blocking agent" is used in its commonly accepted sense to mean a particulate material which is incompatible with the polymeric material of the associated layer (b) or (c) and which serves to prevent contacting surfaces blocking or sticking together. The particles of the anti-blocking agent generally protrude from the surface of the associated layer (b) or (c) and preferably are formed of an inorganic material such as silica, a clay, talc or glass.

Unlike the prior art composite films which may contain a fatty acid amide such as erucamide, stearamide, behenamide and oleamide, to impart lubricity or slip to the films, e.g., the multilayer films described in U.S. Patent Nos. 4,343,852 and 4,419,411, supra, the film of this invention does not contain such an ingredient since it usually interferes with the receptivity of the film surface for, and the adhesion of, water-based inks and water-based adhesives. Moreover, when concentrated at the film surface, a fatty acid amide can appreciably reduce the optical clarity of the film.

A heat sealable film possessing both good lubricity and both good receptivity for water-based surface coating materials and optical clarity such as the present film is highly advantageous since it permits the convertor or end user to utilize inks and/or adhesives which do not incorporate organic solvents. Organic solvents generally present health, explosion and fire hazards and resort must be made to expensive ventilation and safely equipment to provide an acceptable working environment where they are used. Even with the use of such equipment, in some jurisdictions, the atmospheric emission of organic solvents is prohibited and expensive solvent recovery systems are required to comply with legal limitations.

The laminate of the invention comprises a core layer (a) derived from polypropylene of high stereoregularity and in general from highly isotactic polypropylene. The polypropylene generally can have a melt index at 230°C of 1.0 to 25.0, a crystalline melting point of about 160°C, a number average molecular weight ranging from 25,000 to 100,000 and a density ranging from 0.90 to 0.91. The polypropylene core layer (a) is preferably substantially free of lubricants, such as erucamide, which could migrate to the surface of the layers (b) and (c) and thereby adversely affect the receptivity of the layer (b) for water-based coatings.

A first surface layer (b) is from an ethylene-propylene-butene-1 (EPB) terpolymer, an ethylene-propylene (EP) random copolymer or a blend thereof is bonded, normally by coextension with the core layer (a), on one surface of the core layer. Suitable EPB terpolymers for the layer (b) are those obtained from the random interpolymerization of from 1 to 8 weight percent ethylene, preferably from 3 to 6 weight percent ethylene, with from 65 to 95 weight percent propylene, preferably from 86 to 93 weight percent propylene, with butene-1 representing the balance. The foregoing EPB terpolymers are for the most part characterized by a melt index at 230°C of 2 to 16 and advantageously 3 to 7, a crystalline melting point of 100°C to 120°C, an average molecular weight of 25,000 to 100,000 and a density of 0.89 to 0.92 gm/cm³. The EP random copolymers generally contain from 2 to 7 weight percent ethylene, the balance being made up of propylene. The copolymers generally have a melt index at 230°C generally ranging from 2 to 15 and preferably from 3 to 8. The crystalline melting point is usually from 125°C to 150°C and the number average molecular weight range is from 25,000 to 100,000. The density will usually range from 0.89 to 0.92

3

gm/cm$^3$.

In general, where blends of EPB terpolymer and EP random copolymer are used, said blends will contain from 10 to 90 weight percent EPB terpolymer and preferably from 40 to 60 weight percent EPB terpolymer, the balance being made up of EP random copolymer.

Prior to extrusion, layer (b) is compounded with an effective amount of an anti-blocking agent, e.g., silica, clays, talc and glass which is preferably provided in the form of approximately spheroidal particles. The major proportion of these particles, for example, 50 to 90 weight percent are arranged to be of such a size that a significant portion of their surface area, for example, from 10 to 70 percent thereof, will extend beyond the exposed surface of layer (b). The polymer of layer (b) is not compounded with a silicone oil, but the surface of layer (b) ultimately acquires a coefficient of friction-reducing amount of silicone oil. Thus, when the finished film laminate containing silicone oil on the exposed surface of layer (c) is wound on a roll, some of the silicone oil is inevitably transferred from this surface to the exposed surface of layer (b), primarily to the exposed surfaces of the anti-blocking agent particles which protrude from layer (b). However, since the interior of layer (b) contains no silicone oil which could interfere with the heat sealing properties of this layer, the presence thereon of the transferred silicone oil serves to reduce the coefficient of friction of the layer without significantly impairing its heat sealability.

In order to enhance its receptivity for water-based coatings, layer (b) can be treated by such known techniques as corona discharge and flame treating.

The second surface layer (c) of the laminate, which is provided on the other surface of the core layer (a), can be of substantially the same composition as that of the first surface layer (b) except that the polymer constituting layer (c) is compounded with a silicone oil. The silicone oil advantageously possesses a viscosity of 350 to 100,000 centistokes, with 10,000 to 30,000 centistokes being especially preferred. Examples of suitable silicone oils are polydialkyl-siloxanes, polyalkylphenylsiloxanes, preferably having from 1 to 4 carbon atoms in the alkyl group, olefin-modified siloxane oils, polyether-modified silicone oils, olefin-polyether-modified silicone oils, and epoxy-modified and alcohol-modified silicone oils. Of the foregoing, the polydialkylsiloxanes, and in particular polydimethylsiloxane, are preferred.

The silicone oil is added to layer (c) generally in the form of a dispersion or emulsion so that the silicone oil is present within the layer (c) as well as on the exposed surface of the layer, as discrete microglobules, frequently of an average size of 1 to 2 micron/meters. The silicone oil, which is generally substantially uniformly distributed on the exposed surface of layer (c), is responsible for imparting a reduced coefficient of friction to this surface as well as to the exposed surface of layer (b) when some of the oil is transferred thereto after these surfaces have been placed in mutual contact, e.g., as will occur when the laminate film has been wound on a roll.

Polydimethylsiloxane or other silicone oil preferably comprises from 0.15 to 1.5 weight percent of the layer (c). Some of this silicone oil will, of course, be present on the exposed surface of layer (c). The amount selected should in any event be sufficient to provide a coefficient of friction of layers (b) and (c) (following transfer of silicone oil microglobules to the latter) of 0.4 or less, preferably between 0.25 to 0.3, up to at least about 60°C. Because of the manner in which the silicone oil is applied to just the exposed surface of the first layer (b), such layer exhibits an improved coefficient of friction but not at the expense of its receptivity to water-based coatings, its heat sealability or its optical clarity.

The silicone oil should be incorporated as homogeneously as possible in the polymer constituting layer (c). This can be achieved by either incorporating the silicone oil as a dispersion or emulsion at room temperature and then heating the blend with the application of shearing forces or by incorporating the oil while the blend is being melted. The mixing temperature should be high enough to soften the blend and enable a very uniform mixture to be formed and generally from 170° to 270°C.

Optionally, layers (b) and/or (c) can contain a minor amount of a wax, e.g., a microcrystalline wax for added lubricity. Amounts of wax of 2 to 15 weight percent of either or both layers (b) and (c) can be used if desired. Either or both of these layers can also contain pigments, fillers, stabilizers, light protective agents or other suitable modifying ingredients if desired.

Core layer (a) usually represent from 70 to 90 percent of the thickness of the overall film laminate. First surface layer (b) and second surface layer (c) are coextensively applied to each major surface of core layer (a), usually by being coextruded directly thereon. For example, individual polymer streams constituting the material of layers (a), (b) and (c) can be coextruded from a conventional extruder through a flat sheet die, the melt streams being combined in an adapter prior to being extruded from the die. Each of surface layers (b) and (c) can comprise, for example, approximately 6.0% of the total thickness of the laminate. After leaving the die orifice, the laminate structure is chilled and the quenched sheet then heated and stretched, e.g., five times in the machine direction (MD) and then subsequently eight times in the transverse direction (TD). The edges of the film are then trimmed and the film laminate is then wound on a reel in order to effect transfer of silicone oil from the exposed surface of layer (c) to the exposed surface of layer (b) as previously explained.

The overall thickness of the laminate is not critical and advantageously can range from 9 to 50 $\mu$m (0.35 to 2.0 mils).

The invention will now be more particularly described with reference to the following Examples.

EXAMPLE 1 (Comparative)

A core layer (a) of about 20 microns thickness derived from a propylene homopolymer of high stereoregularity (Cosden 8670C) containing 750 ppm erucamide was melted and coextruded with a first surface layer (b) of about 0.61 microns thickness derived from a 50:40 weight percent blend of an ethylene-propylene-butene-1 terpolymer (CHISSO XF7700) and an ethylene- propylene random copolymer (Cosden W756) containing 10 weight percent of microcrystalline wax, and a second surface layer (c) of about 1.2 micron/meters thickness of the aforesaid ethylene-propylene-butene-1 terpolymer containing 10 weight percent of the wax. The EPB terpolymer components of layers (b) and (c) each contained about 0.2 weight percent of synthetic amorphous silica in the form of approximately spherical particles averaging 3 micron/meters diameter. The extrudate was then cooled, reheated and stretched biaxially 4-6 times in the machine direction and 8-10 times in the transverse direction. Subsequently, the first surface layer (b) was corona treated in a conventional manner and wound on a mill roll form. After 1-3 days of hot room aging at 38-51°C (100-125°F)., the coefficient of friction of layers (b) and (c) were 0.26 and 0.29 respectively. However, as shown in the table below, layer (b) was not receptive to a water-based polyvinylidene chloride adhesive (Morton 2015).

EXAMPLE 2 (Comparative)

Example 1 was substantially repeated but using Shell DX 5097 isotactic polypropylene without erucamide as the resin constituting core layer (a). In addition, polydimethylsiloxane at 0.6 weight percent loading was compounded in layers (b) and (c). As shown from the data in the accompanying table, the coefficient of friction of the resultant laminate was good. Also the laminate exhibited satisfactory wet-out (the ability of a material to be uniformly wetted by a liquid) and adhesion to water-based ink (Aqualam P-White) and water-based adhesive (Morton 2015). However, the heat sealability of layer (b) was essentially destroyed due to the presence of the silicone oil in layer (b) as well as in layer (c).

EXAMPLE 3

Example 2 was substantially repeated but with 0.6 weight percent of polydimethylsiloxane compounded in layer (c) only. Layer (b) contained no silicone oil. The advantages of coefficient of friction conversion characteristics and retention of heat sealability are apparent from the accompanying table.

The film also possessed good optical clarity characteristics.

**TABLE**

| Example | Treated Side | Slip | COF Treated | COF Untreated | Crimp Seal Strength (116°C) (240°F) 3/4 Sec. (GM/2.54cm) |
|---|---|---|---|---|---|
| 1 | Layer (b) | 750ppm Erucamide | .26 | .22 | 425 |
| 2 | Layer (b) | Silicone oil in Layers (b) and (c) | .30 | .30 | 0 |
| 3 | Layer (b) | Silicone oil in Layer (c) only | .30 | .30 | 475 |

**TABLE** (continued)

| Example | Aqualam-P Wet-Out | White Adhesion | Norton 2015 Wet-Out | PVDC Adhesion | Bond Strength (GM/2.54cm) |
|---|---|---|---|---|---|
| 1 | OK | OK | Very Poor | Very Poor | Very Poor |
| 2 | Good | Good | Good | Good | 714 |
| 3 | Good | Good | Good | Good | 590 |

**Description for the following Contracting States : AT, CH, LI, LU, SE**

This invention relates to a heat sealable polymer film laminate.

Heat sealable multilayer films which are especially useful as packaging materials are well known in the art. For example, U.S. Patent No. 4,343,852 describes a uniaxially or biaxially stretched composite film packaging material of from 5 to 200 micron/meters total thickness possessing a propylene polymer base film and at least one surface film containing at least two of (a) an ethylene-propylene (EP) copolymer, (b) a propylene-alpha-olefin copolymer and (c) a copolymer of butene and any other alpha-olefin. The propylene polymer base-film can contain any one of a variety of additives, e.g., a lubricating agent such as a fatty acid amide, and each surface film can contain from 0.01 to 0.15 parts by weight of a silicone oil to improve its coefficient of friction in the heated state and reduce its slide resistance caused during hot plate sealing by an automatic packaging machine. Examples of silicone oils which are said to be useful for this purpose are polydimethylsiloxane, polymethylphenylsiloxane, olefin-modified silicone, polyether (e.g. polyethylene glycol, polypropylene glycol)-modified silicone, olefin/polyether-modified silicone and epoxy-modified silicone.

U.S. Patent No. 4,400,428 describes a heat sealable, multilayer film packaging material possessing a biaxially stretched polypropylene film as the base film, an adhesion- promoting layer of modified polyolefin, a gas-barrier layer of hydrolyzed ethylene-vinyl acetate copolymer and a heat-sealing layer of olefin polymers, wherein the base film carries on at least one surface a layer combination consisting of: (a) a heat sealable outer layer of polyethylene or of an ethylene copolymer containing at least 3%, and preferably at least 4%, by weight of ethylene; (b) an adhesion-promoting layer of modified polyolefin; (c) a gas-barrier layer of a hydrolyzed ethylene/vinyl acetate copolymer containing from 50 to 80 mole percent of vinyl acetate units of which at least 90% by hydrolyzed; (d) an adhesion- promoting layer of modified polyolefin; and, (e) a layer of polyethylene or of an ethylene copolymer containing at least 3, preferably at least 4% by weight of ethylene. Layer (a) contains an additive combination consisting of: (1) from 0.3 to 1% by weight, basedon the sealable layer, of a long-chain aliphatic amine; (2) from 0.1 to 0.7% by weight, based on the sealable layer, of a dispersed thermoplastic polymer which is incompatible with the polyethylene or ethylene copolymer and which has a softening point at most 50°C below or above the softening point of the polyethylene or ethylene copolymer; and, (3) from 0.1 to 1.2% by weight, preferably 0.2-0.7, based on the sealable layer, of a polydialkylsiloxane, preferably polydimethylsiloxane. The foregoing additive combination is said to produce a multilayer film having good slip properties combined with good machine processibility compared to multilayer films containing known type lubricants such as the fatty acid amides, e.g., erucamide.

U.S. Patent No. 4,419,411 describes an oriented multi-layer polypropylene film structure comprising coextended layers of: (a) a base layer comprising polypropylene of comparatively high stereoregularity, the precursor resin of which contains an amide of a water-insoluble monocarboxylic acid having 8 to 24 carbon atoms, e.g., erucamide; (b) a skin layer comprising a polyolefin of comparatively low stereoregularity on at least one surface of (a), said skin layer containing a surface-modifying proportion of a combination of finely divided silica and a silicone oil such as a 30,000 centistokes polydimethylsiloxane; the surface of skin layer (b) having bloomed thereon a surface-modifying proportion of at least some of the amide of base layer (a).

U.S. Patent No. 4,502,263 describes a heat sealable polyolefinic multilayer film possessing a base layer comprising a propylene polymer and at least one sealable layer containing at least one propylene copolymer, at least one low-molecular weight resin and at least one polydiorgano- siloxane, wherein the sealing layer comprises a combination of: (a) from about 68.5 to 89.7% by weight, based on the weight of the sealable layer, of an olefin resin composition comprising an ethylene-propylene-butylene terpolymer and a propylene-butylene copolymer, corresponding to a content of from 0.1 to 7% by weight of ethylene, 53 to 89.9% by weight of propylene and 10 to 40% by weight of butylene, based on the weight of the olefin resin composition; (b) from 5 to 15% by weight, based on the weight of the sealable layer, of a low-molecular weight resin, which is compatible with the olefin resin composition; (c) from 5 to 15% by weight, based on the weight of the sealable layer, of a propylene homopolymer; and (d) from 0.3 to 1.5% by weight, based on the weight of the sealable layer, of a polydiorganosiloxane such as any of those referred to above.

US 4293608 discloses a heat sealable material comprising (A) a stretched base layer comprising a propylene polymer and (B) on at least one surface of said base layer a stretched surface layer comprising a blend of a propylene-ethylene copolymer and a $C_4$-$C_{10}$ $\alpha$-olefin propylene copolymer comprising units of a $C_4$-$C_{10}$ $\alpha$-olefin and units of propylene in a weight proportion of 30:70 to 5:95, said blend being present in a weight proportion of 20:80 to 94:6 by weight.

An object of the present invention is to provide an oriented, heat sealable polymer film laminate possessing a low coefficient of friction, good receptivity for water-based coatings and good optical clarity.

According to the present invention, there is provided an oriented, heat-sealable polymer film laminate comprising:

(a) a polypropylene core layer, and

(b) a first heat-sealable surface layer for receiving a water-based coating provided on one surface of the core layer (a), the first surface layer being formed from a polymer selected from an ethylene-propylene-butene-1 terpolymer, an ethylene-propylene random copolymer and a blend thereof, said polymer being compounded with an anti-blocking agent but not being compounded with silicone oil;

(c) a second surface layer on the other surface of core layer (a) and formed from a polymer selected from an ethylene-propylene-butene-1 terpolymer, an ethylene-propylene random copolymer and a blend thereof, said polymer being compounded with an anti-blocking agent and a silicone oil such that a coefficient of friction-reducing amount thereof is present on the exposed surface of layer (b) as well as the exposed surface of layer (c) following mutual contact of said surfaces.

The term "water-based coating" is to be understood in its broadest sense and includes water-based inks and water-based adhesives.

EP 0 217 598 B1

The term "anti-blocking agent" is used in its commonly accepted sense to mean a particulate material which is incompatible with the polymeric material of the associated layer (b) or (c) and which serves to prevent contacting surfaces blocking or sticking together. The particles of the anti-blocking agent generally protrude from the surface of the associated layer (b) or (c) and preferably are formed of an inorganic material such as silica, a clay, talc or glass.

Unlike the prior art composite films which may contain a fatty acid amide such as erucamide, stearamide, behenamide and oleamide, to impart lubricity or slip to the films, e.g., the multilayer films described in U.S. Patent Nos. 4,343,852 and 4,419,411, supra, the film of this invention does not contain such an ingredient since it usually interferes with the receptivity of the film surface for, and the adhesion of, water-based inks and water-based adhesives. Moreover, when concentrated at the film surface, a fatty acid amide can appreciably reduce the optical clarity of the film.

A heat sealable film possessing both good lubricity and both good receptivity for water-based surface coating materials and optical clarity such as the present film is highly advantageous since it permits the convertor or end user to utilize inks and/or adhesives which do not incorporate organic solvents. Organic solvents generally present health, explosion and fire hazards and resort must be made to expensive ventilation and safely equipment to provide an acceptable working environment where they are used. Even with the use of such equipment, in some jurisdictions, the atmospheric emission of organic solvents is prohibited and expensive solvent recovery systems are required to comply with legal limitations.

The laminate of the invention comprises a core layer (a) derived from polypropylene of high stereoregularity and in general from highly isotactic polypropylene. The polypropylene generally can have a melt index at 230°C of 1.0 to 25.0, a crystalline melting point of about 160°C, a number average molecular weight ranging from 25,000 to 100,000 and a density ranging from 0.90 to 0.91. The polypropylene core layer (a) is preferably substantially free of lubricants, such as erucamide, which could migrate to the surface of the layers (b) and (c) and thereby adversely affect the receptivity of the layer (b) for water-based coatings.

A first surface layer (b) is from an ethylene-propylene-butene-1 (EPB) terpolymer, an ethylene-propylene (EP) random copolymer or a blend thereof is bonded, normally by coextension with the core layer (a), on one surface of the core layer. Suitable EPB terpolymers for the layer (b) are those obtained from the random interpolymerization of from 1 to 8 weight percent ethylene, preferably from 3 to 6 weight percent ethylene, with from 65 to 95 weight percent propylene, preferably from 86 to 93 weight percent propylene, with butene-1 representing the balance. The foregoing EPB terpolymers are for the most part characterized by a melt index at 230°C of 2 to 16 and advantageously 3 to 7, a crystalline melting point of 100°C to 120°C, an average molecular weight of 25,000 to 100,000 and a density of 0.89 to 0.92 gm/cm$^3$. The EP random copolymers generally contain from 2 to 7 weight percent ethylene, the balance being made up of propylene. The copolymers generally have a melt index at 230°C generally ranging from 2 to 15 and preferably from 3 to 8. The crystalline melting point is usually from 125°C to 150°C and the number average molecular weight range is from 25,000 to 100,000. The density will usually range from 0.89 to 0.92 gm/cm$^3$.

In general, where blends of EPB terpolymer and EP random copolymer are used, said blends will contain from 10 to 90 weight percent EPB terpolymer and preferably from 40 to 60 weight percent EPB terpolymer, the balance being made up of EP random copolymer.

Prior to extrusion, layer (b) is compounded with an effective amount of an anti-blocking agent, e.g., silica, clays, talc and glass which is preferably provided in the form of approximately spheroidal particles. The major proportion of these particles, for example, 50 to 90 weight percent are arranged to be of such a size that a significant portion of their surface area, for example, from 10 to 70 percent thereof, will extend beyond the exposed surface of layer (b). The polymer of layer (b) is not compounded with a silicone oil, but the surface of layer (b) ultimately acquires a coefficient of friction-reducing amount of silicone oil. Thus, when the finished film laminate containing silicone oil on the exposed surface of layer (c) is wound on a roll, some of the silicone oil is inevitably transferred from this surface to the exposed surface of layer (b), primarily to the exposed surfaces of the anti-blocking agent particles which protrude from layer (b). However, since the interior of layer (b) contains no silicone oil which could interfere with the heat sealing properties of this layer, the presence thereon of the transferred silicone oil serves to reduce the coefficient of friction of the layer without significantly impairing its heat sealability.

In order to enhance its receptivity for water-based coatings, layer (b) can be treated by such known techniques as corona discharge and flame treating.

The second surface layer (c) of the laminate, which is provided on the other surface of the core layer (a), can be of substantially the same composition as that of the first surface layer (b) except that the polymer constituting layer (c) is compounded with a silicone oil. The silicone oil advantageously possesses a viscosity of 350 to 100,000 centistokes, with 10,000 to 30,000 centistokes being especially preferred. Examples of suitable silicone oils are polydialkyl-siloxanes, polyalkylphenylsiloxanes, preferably having from 1 to 4 carbon atoms in the alkyl group, olefin-modified siloxane oils, polyether-modified silicone oils, olefin-polyether-modified silicone oils, and epoxy-modified and alcohol-modified silicone oils. Of the foregoing, the polydialkylsiloxanes, and in particular polydimethylsiloxane, are preferred.

The silicone oil is added to layer (c) generally in the form of a dispersion or emulsion so that the silicone oil is present within the layer (c) as well as on the exposed surface of the layer, as discrete microglobules, frequently of an average size of 1 to 2 micron/meters. The silicone oil, which is generally substantially uniformly distributed on the exposed surface of layer (c), is responsible for imparting a reduced coefficient of friction to this surface as well as to the exposed surface of layer (b) when some of the oil is transferred thereto after these surfaces have been placed in mutual contact, e.g., as will occur when the laminate film has been wound on a roll.

Polydimethylsiloxane or other silicone oil preferably comprises from 0.15 to 1.5 weight percent of the layer (c). Some of this silicone oil will, of course, be present on the exposed surface of layer (c). The amount selected should in any event be sufficient to provide a coefficient of friction of layers (b) and (c) (following transfer of silicone oil microglobules to the latter) of 0.4 or less, preferably between 0.25 to 0.3, up to at least about 60°C. Because of the manner in which the silicone oil is applied to just the exposed surface of the first layer (b), such layer exhibits an improved coefficient of friction but not at the expense of its receptivity to water-based coatings, its heat sealability or its optical clarity.

The silicone oil should be incorporated as homogeneously as possible in the polymer constituting layer (c). This can be achieved by either incorporating the silicone oil as a dispersion or emulsion at room temperature and then heating the blend with the application of shearing forces or by incorporating the oil while the blend is being melted. The mixing temperature should be high enough to soften the blend and enable a very uniform mixture to be formed and generally from 170° to 270°C.

Optionally, layers (b) and/or (c) can contain a minor amount of a wax, e.g., a microcrystalline wax for added lubricity. Amounts of wax of 2 to 15 weight percent of either or both layers (b) and (c) can be used if desired. Either or both of these layers can also contain pigments, fillers, stabilizers, light protective agents or other suitable modifying ingredients if desired.

Core layer (a) usually represent from 70 to 90 percent of the thickness of the overall film laminate. First surface layer (b) and second surface layer (c) are coextensively applied to each major surface of core layer (a), usually by being coextruded directly thereon. For example, individual polymer streams constituting the material of layers (a), (b) and (c) can be coextruded from a conventional extruder through a flat sheet die, the melt streams being combined in an adapter prior to being extruded from the die. Each of surface layers (b) and (c) can comprise, for example, approximately 6.0% of the total thickness of the laminate. After leaving the die orifice, the laminate structure is chilled and the quenched sheet then heated and stretched, e.g., five times in the machine direction (MD) and then subsequently eight times in the transverse direction (TD). The edges of the film are then trimmed and the film laminate is then wound on a reel in order to effect transfer of silicone oil from the exposed surface of layer (c) to the exposed surface of layer (b) as previously explained.

The overall thickness of the laminate is not critical and advantageously can range from 9 to 50 $\mu$m (0.35 to 2.0 mils).

The invention will now be more particularly described with reference to the following Examples.

EXAMPLE 1 (Comparative)

A core layer (a) of about 20 microns thickness derived from a propylene homopolymer of high stereoregularity (Cosden 8670C) containing 750 ppm erucamide was melted and coextruded with a first surface layer (b) of about 0.61 microns thickness derived from a 50:40 weight percent blend of an ethylene-propylene-butene-1 terpolymer (CHISSO XF7700) and an ethylene- propylene random copolymer (Cosden W756) containing 10 weight percent of microcrystalline wax, and a second surface layer (c) of about 1.2 micron/meters thickness of the aforesaid ethylene-propylene-butene-1 terpolymer containing 10 weight percent of the wax. The EPB terpolymer components of layers (b) and (c) each contained about 0.2 weight percent of synthetic amorphous silica in the form of approximately spherical particles averaging 3 micron/meters diameter. The extrudate was then cooled, reheated and stretched biaxially 4-6 times in the machine direction and 8-10 times in the transverse direction. Subsequently, the first surface layer (b) was corona treated in a conventional manner and wound on a mill roll form. After 1-3 days of hot room aging at 38-51°C (100-125°F)., the coefficient of friction of layers (b) and (c) were 0.26 and 0.29 respectively. However, as shown in the table below, layer (b) was not receptive to a water-based polyvinylidene chloride adhesive (Morton 2015).

EXAMPLE 2 (Comparative)

Example 1 was substantially repeated but using Shell DX 5097 isotactic polypropylene without erucamide as the resin constituting core layer (a). In addition, polydimethylsiloxane at 0.6 weight percent loading was compounded in layers (b) and (c). As shown from the data in the accompanying table, the coefficient of friction of the resultant laminate was good. Also the laminate exhibited satisfactory wet-out (the ability of a material to be uniformly wetted by a liquid) and adhesion to water-based ink (Aqualam P-White) and water-based adhesive (Morton 2015). However, the heat sealability of layer (b) was essentially destroyed due to the presence of the silicone oil in layer (b) as well as in layer (c).

EXAMPLE 3

Example 2 was substantially repeated but with 0.6 weight percent of polydimethylsiloxane compounded in layer (c) only. Layer (b) contained no silicone oil. The advantages of coefficient of friction conversion characteristics and retention of heat sealability are apparent from the accompanying table.

The film also possessed good optical clarity characteristics.

**TABLE**

| Example | Treated Side | Slip | COF Treated | COF Untreated | Crimp Seal Strength (116°C) (240°F) 3/4 Sec. (GM/2.54cm) |
|---|---|---|---|---|---|
| 1 | Layer (b) | 750ppm Erucamide | .26 | .22 | 425 |
| 2 | Layer (b) | Silicone oil in Layers (b) and (c) | .30 | .30 | 0 |
| 3 | Layer (b) | Silicone oil in Layer (c) only | .30 | .30 | 475 |

**TABLE** (continued)

| Example | Aqualam-P Wet-Out | White Adhesion | Norton 2015 Wet-Out | PVDC Adhesion | Bond Strength (GM/2.54cm) |
|---|---|---|---|---|---|
| 1 | OK | OK | Very Poor | Very Poor | Very Poor |
| 2 | Good | Good | Good | Good | 714 |
| 3 | Good | Good | Good | Good | 590 |

**Claims**

**Claims for the following Contracting States : BE, DE, FR, GB, IT, NL**

1. An orientated, heat-sealable polymer film laminate comprising:
   (a) a polypropylene core layer, and
   (b) a flame-treated first heat-sealable surface layer for receiving a water-based coating provided on one surface of the core layer (a), the first surface layer being formed from a polymer selected from an ethylene-propylene-butene-1 terpolymer, an ethylene-propylene random copolymer and a blend thereof, said polymer being compounded with an anti-blocking agent but not being compounded with silicone oil;
   (c) a second surface layer on the other surface of core layer (a) and formed from a polymer selected from an ethylene-propylene-butene-1 terpolymer, an ethylene-propylene random copolymer and a blend thereof, said polymer being compounded with an anti-blocking agent and a silicone oil such that a coefficient of friction-reducing amount of silicone oil is present on the exposed surface of layer

11

(b) as well as the exposed surface of layer (c) following mutual contact of said surfaces.

2. The laminate of claim 1 containing a wax in layer (b) and/or (c).

3. The laminate of claim 1 or claim 2 in which the silicone oil is a polydialkylsiloxane.

4. The laminate of claim 1 or claim 2 in which the silicone oil is polydimethysiloxane.

5. The laminate of any preceding claim in which at least a major proportion of the anti-blocking agent is in the form of particles of approximately spherical shape.

6. The laminate of any preceding Claim in which the anti-blocking agent is silica.

7. The laminate of any preceding Claim in which from 10 to 70 percent of the total surface area of the anti-blocking agent extends beyond the exposed surface of layers (b) and (c).

8. The laminate of any preceding Claim in which the ethylene-propylene-butene-1 terpolymer is obtained from the random interpolymerization of from 1 to 8 weight percent ethylene with from 65 to 95 propylene, with butene-1 making up the balance of the terpolymer.

9. The laminate of Claim 1 in which the ethylene-propylene random copolymer is obtained from the random co-polymerization of from 2 to 7 weight percent ethylene with 93 to 98 weight percent propylene.

10. The laminate of any preceding Claim in which the core layer (a) constitutes at least 70 percent of the total thickness of the laminate.

**Claims for the following Contracting States : AT, CH, LI, LU, SE**

1. An oriented, heat-sealable polymer film laminate comprising:
   (a) a polypropylene core layer, and
   (b) a first heat-sealable surface layer for receiving a water-based coating provided on one surface of the core layer (a), the first surface layer being formed from a polymer selected from an ethylene-propylene-butene-1 terpolymer, an ethylene-propylene random copolymer and a blend thereof, said polymer being compounded with an anti-blocking agent but not being compounded with silicone oil;
   (c) a second surface layer on the other surface of core layer (a) and formed from a polymer selected from an ethylene-propylene-butene-1 terpolymer, an ethylene-propylene random copolymer and a blend thereof, said polymer being compounded with an anti-blocking agent and a silicone oil such that a coefficient of friction-reducing amount of silicone oil is present on the exposed surface of layer (b) as well as the exposed surface of layer (c) following mutual contact of said surfaces.

2. The laminate of claim 1 containing a wax in layer (b) and/or (c).

3. The laminate of claim 1 or claim 2 in which the silicone oil is a polydialkylsiloxane.

4. The laminate of claim 1 or claim 2 in which the silicone oil is polydimethylsiloxane.

5. The laminate of any preceding claim in which at least a major proportion of the anti-blocking agent is in the form of particles of approximately spherical shape.

6. The laminate of any preceding Claim in which the anti-blocking agent is silica.

7. The laminate of any preceding Claim in which from 10 to 70 percent of the total surface area of the anti-blocking agent extends beyond the exposed surface of layers (b) and (c).

8. The laminate of any preceding Claim in which the ethylene-propylene-butene-1 terpolymer is obtained from the random interpolymerization of from 1 to 8 weight percent ethylene with from 65 to 95 propylene, with butene-1 making up the balance of the terpolymer.

9. The laminate of Claim 1 in which the ethylene-propylene random copolymer is obtained from the random co-polymerization of from 2 to 7 weight percent ethylene with 93 to 98 weight percent propylene.

10. The laminate of any preceding Claim in which the core layer (a) constitutes at least 70 percent of the total thickness of the laminate.

**Patentansprüche**
**Patentansprüche für folgende Vertragsstaaten : BE, DE, FR, GB, IT, NL**

1. Orientiertes, heißsiegelbares Polymerfilmlaminat enthaltend:
   (a) eine Polypropylen-Kernschicht und
   (b) eine flammenbehandelte erste, heißsiegelbare Oberflächenschicht zur Aufnahme eines Überzugs auf wäßriger Basis, welche an einer Oberfläche der Kernschicht (a) vorgesehen ist, wobei die erste Oberflächenschicht aus einem Polymer gebildet ist, das aus einem Ethylen-Propylen-Buten-1-Terpolymer, einem statistischen Ethylen-Propylen-Copolymer und einer Mischung hiervon ausgewählt ist und wobei das genannte Polymer mit einem Antiblockmittel, jedoch nicht mit Siliconöl, versetzt ist;
   (c) auf der anderen Oberfläche der Kernschicht (a) eine zweite Oberflächenschicht, welche aus einem Polymer gebildet ist, das aus einem Ethylen-Propylen-Buten-1-Terpolymer, einem statistischen Ethylen-Propylen-Copolymer und einer Mischung hiervon ausgewählt ist, wobei das genannte Polymer mit einem Antiblockmittel und einem Siliconöl derart versetzt ist, daß eine den Reibungskoeffizienten vermindernde Menge an Siliconöl auf der freien Oberfläche der Schicht (b) sowie auf der freien Oberfläche der Schicht (c) nach einem gegenseitigen Kontakt dieser Oberflächen vorliegt.

2. Laminat nach Anspruch 1, enthaltend ein Wachs in der Schicht (b) und/oder (c).

3. Laminat nach Anspruch 1 oder Anspruch 2, worin das Siliconöl ein Polydialkylsiloxan ist.

4. Laminat nach Anspruch 1 oder Anspruch 2, worin das Siliconöl Polydimethylsiloxan ist.

5. Laminat nach einem der vorangehenden Ansprüche, worin mindestens der überwiegende Anteil des Antiblockmittels in Form von Teilchen mit einer annähernd kugelförmigen Gestalt vorliegt.

6. Laminat nach einem der vorangehenden Ansprüche, worin das Antiblockmittel Siliciumdioxid ist.

7. Laminat nach einem der vorangehenden Ansprüche, worin 10 bis 70 % der Gesamtoberfläche des Antiblockmittels über die freie Oberfläche der Schichten (b) und (c) vorsteht.

8. Laminat nach einem der vorangehenden Ansprüche, worin das Ethylen-Propylen-Buten-1-Terpolymer durch die statistische Interpolymerisation von 1 bis 8 Gew.-% Ethylen mit 65 bis 95 Gew.-% Propylen gewonnen wird, wobei der Rest des Terpolymers von Buten-1 gebildet wird.

9. Laminat nach Anspruch 1, worin das statistische Ethylen-Propylen-Copolymer durch die statistische Copolymerisation von 2 bis 7 Gew.-% Ethylen mit 93 bis 98 Gew.-% Propylen erhalten wird.

10. Laminat nach einem der vorangehenden Ansprüche, worin die Kernschicht (a) mindestens 70 % der Gesamtdicke des Laminats bildet.

**Patentansprüche für folgende Vertragsstaaten : AT, CH, LI, LU, SE**

1. Orientiertes, heißsiegelbares Polymerfilmlaminat enthaltend:
   (a) Eine Polypropylen-Kernschicht und
   (b) eine erste, heißsiegelbare Oberflächenschicht zur Aufnahme eines Überzugs auf wäßriger Basis, welche an einer Oberfläche der Kernschicht (a) vorgesehen ist, wobei die erste Oberflächenschicht aus einem Polymer gebildet ist, das aus einem Ethylen-Propylen-Buten-1-Terpolymer, einem statistischen Ethylen-Propylen-Copolymer und einer Mischung hiervon ausgewählt ist und wobei das genannte Polymer mit einem Antiblockmittel, jedoch nicht mit Siliconöl, versetzt ist;

(c) auf der anderen Oberfläche der Kernschicht (a) eine zweite Oberflächenschicht, welche aus einem Polymer gebildet ist, das aus einem Ethylen-Propylen-Buten-1-Terpolymer, einem statistischen Ethylen-Propylen-Copolymer und einer Mischung davon ausgewählt ist, wobei das genannte Polymer mit einem Antiblockmittel und einem Siliconöl derart versetzt ist, daß eine den Reibungskoeffizienten vermindernde Menge an Siliconöl auf der freien Oberfläche der Schicht (b) sowie auf der freien Oberfläche der Schicht (c) nach einem gegenseitigen Kontakt dieser Oberflächen vorliegt.

2. Laminat nach Anspruch 1, enthaltend ein Wachs in der Schicht (b) und/oder (c).

3. Laminat nach Anspruch 1 oder Anspruch 2, worin das Siliconöl ein Polydialkylsiloxan ist.

4. Laminat nach Anspruch 1 oder Anspruch 2, worin das Siliconöl Polydimethylsiloxan ist.

5. Laminat nach einem der vorangehenden Ansprüche, worin mindestens der überwiegende Anteil des Antiblockmittels in Form von Teilchen mit einer annähernd kugelförmigen Gestalt vorliegt.

6. Laminat nach einem der vorangehenden Ansprüche, worin das Antiblockmittel Siliciumdioxid ist.

7. Laminat nach einem der vorangehenden Ansprüche, worin 10 bis 70 % der Gesamtoberfläche des Antiblockmittels über die freie Oberfläche der Schichten (b) und (c) vorsteht.

8. Laminat nach einem der vorangehenden Ansprüche, worin das Ethylen-Propylen-Buten-1-Terpolymer durch die statistische Interpolymerisation von 1 bis 8 Gew.-% Ethylen mit 65 bis 95 Gew.-% Propylen gewonnen wird, wobei der Rest des Terpolymers von Buten-1 gebildet wird.

9. Laminat nach Anspruch 1, worin das statistische Ethylen-Propylen-Copolymer durch die statistische Copolymerisation von 2 bis 7 Gew.-% Ethylen mit 93 bis 98 Gew.-% Propylen erhalten wird.

10. Laminat nach einem der vorangehenden Ansprüche, worin die Kernschicht (a) mindestens 70 % der Gesamtdicke des Laminats bildet.

**Revendications**
**Revendications pour les Etats contractants suivants : BE, DE, FR, GB, IT, NL**

1. Stratifié à base d'un film d'un polymère thermo-scellable comprenant:
   (a) une couche d'un noyau polypropylénique; et
   (b) une première couche superficielle ou peau thermiquement scellable traitée à la flamme susceptible de recevoir un revêtement à base d'eau appliqué sur une surface de la couche formant noyau (a), la première couche superficielle étant formée d'un polymère choisi dans le groupe comprenant un terpolymère éthylène-propylène-butène-1, un copolymère statistique éthylène-propylène et leur mélange, ce polymère étant combiné à un agent anti-blocage mais n'étant pas combiné à une huile de silicone;
   (c) une deuxième couche superficielle ou peau appliquée sur l'autre surface de la couche formant noyau (a) et formée d'un polymère choisi dans le groupe comprenant un terpolymère éthylène-propylène-butène-1, un copolymère statistique éthylène-propylène et leur mélange, ce polymère étant associé à un agent antibloquant et à une huile silicone en une quantité telle que le coefficient de réduction de frottement soit obtenu sur la surface exposée de la couche (b), ainsi que sur la surface exposée de la couche (c), après contact mutuel desdites surfaces.

2. Le stratifié selon la revendication 1, dont la couche (b) et/ou la couche (c) contient une cire.

3. Le stratifié selon la revendication 1 ou 2, dans lequel l'huile de silicone est un polydialkylsiloxane.

4. Le stratifié selon la revendication 1 ou 2, dans lequel l'huile de silicone est polydiméthylsiloxane.

5. Le stratifié selon l'une quelconque des revendications précédentes, dans lequel au moins une proportion majeure de l'agent anti-blocage est sous forme de particules ayant une forme approximativement sphérique.

6. Le stratifié selon l'une quelconque des revendications précédentes, dans lequel l'agent anti-blocage est de la silice.

7. Le stratifié selon l'une quelconque des revendications précédentes, dans lequel de 10 à 70% de l'aire surfacique de l'agent anti-blocage déborde de la surface exposée des couches (b) et (c).

8. Le stratifié selon l'une quelconque des revendications précédentes, dans lequel le terpolymère éthylène-propylène-butène-1 est obtenu par interpolymérisation de 1 à 8% en poids d'éthylène avec de 65 à 95% en poids de propylène, le butène-1 formant le reste du terpolymère.

9. Le stratifié selon la revendication 1, dans lequel le copolymère statistique éthylène-propylène est obtenu par copolymérisation statistique de 2 à 7% en poids d'éthylène avec de 93 à 98% en poids de propylène.

10. Le stratifié selon l'une quelconque des revendications précédentes, dans lequel la couche formant noyau (a) forme au moins 70% de l'épaisseur totale du stratifié.

**Revendications pour les Etats contractants suivants : AT, CH, LI, LU, SE**

1. Stratifié à base d'un film d'un polymère thermo-scellable comprenant:
   (a) une couche d'un noyau polypropylénique; et
   (b) une première couche superficielle ou peau thermiquement scellable traitée à la flamme susceptible de recevoir un revêtement à base d'eau appliqué sur une surface de la couche formant noyau (a), la première couche superficielle étant formée d'un polymère choisi dans le groupe comprenant un terpolymère éthylène-propylène-butène-1, un copolymère statistique éthylène-propylène et leur mélange, ce polymère étant combiné à un agent anti-blocage mais n'étant pas combiné à une huile de silicone;
   (c) une deuxième couche superficielle ou peau appliquée sur l'autre surface de la couche formant noyau (a) et formée d'un polymère choisi dans le groupe comprenant un terpolymère éthylène-propylène-butène-1, un copolymère statistique éthylène-propylène et leur mélange, ce polymère étant associé à un agent antibloquant et à une huile silicone en une quantité telle que le coefficient de réduction de frottement soit obtenu sur la surface exposée de la couche (b), ainsi que sur la surface exposée de la couche (c), après contact mutuel desdites surfaces.

2. Le stratifié selon la revendication 1, dont la couche (b) et/ou la couche (c) contient une cire.

3. Le stratifié selon la revendication 1 ou 2, dans lequel l'huile de silicone est un polydialkylsiloxane.

4. Le stratifié selon la revendication 1 ou 2, dans lequel l'huile de silicone est polydiméthylsiloxane.

5. Le stratifié selon l'une quelconque des revendications précédentes, dans lequel au moins une proportion majeure de l'agent anti-blocage est sous forme de particules ayant une forme approximativement sphérique.

6. Le stratifié selon l'une quelconque des revendications précédentes, dans lequel l'agent anti-blocage est de la silice.

7. Le stratifié selon l'une quelconque des revendications précédentes, dans lequel de 10 à 70% de l'aire surfacique de l'agent anti-blocage déborde de la surface exposée des couches (b) et (c).

8. Le stratifié selon l'une quelconque des revendications précédentes, dans lequel le terpolymère éthylène-propylène-butène-1 est obtenu par interpolymérisation de 1 à 8% en poids d'éthylène avec de 65 à 95% en poids de propylène, le butène-1 formant le reste du terpolymère.

9. Le stratifié selon la revendication 1, dans lequel le copolymère statistique éthylène-propylène est obtenu par copolymérisation statistique de 2 à 7% en poids d'éthylène avec de 93 à 98% en poids de propylène.

**10.** Le stratifié selon l'une quelconque des revendications précédentes, dans lequel la couche formant noyau (a) forme au moins 70% de l'épaisseur totale du stratifié.